# EUROPÄISCHE PATENTSCHRIFT

(11) **EP 1 110 003 B1**
(45) Veröffentlichungstag und Bekanntmachung des Hinweises auf die Patenterteilung: **23.04.2003**
(21) Anmeldenummer: 99939256.6
(22) Anmeldetag: 19.08.1999
(51) Int. Cl.: F16B 4/00, G02C 5/22

(54) **FORMSCHLÜSSIGE VERBINDUNG ZWISCHEN EINEM METALLISCHEN STEG UND EINEM AUS KUNSTSTOFF GESPRITZTEN FORMKÖRPER, INSBESONDERE FÜR EINE BRILLE**
POSITIVE-FIT CONNECTION BETWEEN A METALLIC LINK AND AN INJECTION-MOULDED PLASTIC PART, NOTABLY FOR SPECTACLES
LIAISON DE FORME ENTRE UN SEGMENT METALLIQUE ET UNE PIECE PLASTIQUE MOULEE PAR INJECTION, NOTAMMENT D'UNE PAIRE DE LUNETTES

(30) Priorität: 31.08.1998 AT 981478
(43) Veröffentlichungstag der Anmeldung: 27.06.2001
(73) Patentinhaber: SILHOUETTE INTERNATIONAL SCHMIED GMBH & CO. KG., 4021 Linz (AT)
(72) Erfinder: SPINDELBALKER, Rupert, A-4048 Puchenau (AT)
(74) Vertreter: Hübscher, Helmut, Dipl.-Ing.
(86) Internationale Anmeldenummer: AT9900204
(87) Internationale Veröffentlichungsnummer: WO00012905

(56) Entgegenhaltungen:
- DE-A- 2 460 878
- US-A- 3 661 406
- US-A- 4 810 585
- US-A- 5 367 344

## Beschreibung

Die Erfindung bezieht sich auf eine Vorrichtung bestehend aus einem metallischen Steg und einem aus Kunststoff gespritzten Formkörper, insbesondere für eine Brille, wobei ein Ende des Steges in den Formkörper formschlüssig eingreift.

Um beispielsweise den das Bügelscharnier tragenden, metallischen Backenteil mit dem die Fassung für die Gläser bildenden Kunststoffgestell so zu verbinden, daß diese Verbindung ausreichend belastet werden kann, wird der metallische Backenteil mit seinem Eingriffsende in die Spritzgußform für das Brillengestell eingelegt, so daß das Eingriffsende des Backenteiles mit dem Kunststoff des Gestells umspritzt wird. Wegen der unvermeidbaren Toleranzen können sich Schwierigkeiten bei der Abdichtung der Durchführung des metallischen Backenteiles durch die Spritzgußform ergeben, so daß im Sichtbereich des Überganges von der Kunststoffassung zum metallischen Backenteil eine Nachbearbeitung des Backenteiles erforderlich wird. Außerdem besteht die Gefahr, daß die Oberfläche der häufig veredelten Metallteile durch das Einlegen in die Spritzgußform beschädigt wird. Dazu kommt noch, daß sich das Einlegen der Metallteile in die Spritzgußform kaum automatisieren läßt.

Zur Verbindung eines metallischen Zapfens mit einem Brillenglas ist es bekannt (US 5367 344 A), auf den mit Ringwülsten versehenen Zapfen eine Kunststoffhülse aufzustecken. Diese Kunststoffhülse, die eine unprofilierte Einstecköffnung für den Zapfen aufweist, wird durch die Ringwüslte des Zapfens ringförmig aufgeweitet, so daß der mit der Kuhnststoffhülse in eine glatte Glasbohrung eingesetzte Zapfen insbesondere über die elastische Verformung der Kunststoffhülse im Bereich der ringförmigen Aufweitungen festgeklemmt wird. Zur Unterstützung dieser kraftschlüssigen Verbindung zwischen der Kunststoffhülse und der Glasbohrung kann die Kunststoffhülse an der Außenseite mit zusätzlichen Ringwülsten im Bereich der ringförmigen Ausweitungen versehen werden. Da die über die Kunststoffhülse erreichbare Klemmverbindung eine im wesentlichen unnachgiebige Steckaufnahme voraussetzt, ist eine solche Konstruktion für eine feste Verankerung eines metallischen Steges in einer Steckaufnahme eines Formkörpers aus Kunststoff ungeeignet. Ähnliches gilt, wenn ein metallischer Bolzen mit Ringwülsten in einer Durchtrittsbohrung eines Metallkörpers unter Bedingungen eines Preßsitzes gehalten wird (US 3 661 406 A).

Der Erfindung liegt somit die Aufgabe zugrunde, eine Vorrichtung bestehend aus einem metallischen Steg und einem aus Kunststoff gespritzten Formkörper, insbesondere für eine Brille, der eingangs geschilderten Art so auszugestalten, daß eine ausreichend belastbare Verbindung zwischen dem Steg und dem Formkörper mit geringem Aufwand hergestellt werden kann, ohne den metallischen Steg nachbearbeiten zu müssen. Darüber hinaus soll die Gefahr einer Oberflächenbeschädigung des metallischen Steges vermieden werden.

Die Erfindung löst die gestellte Aufgabe dadurch, daß der Formkörper eine Steckaufnahme für das mit einer wellenförmigen Rastprofilierung versehene Eingriffsende des Steges bildet, daß die Steckaufnahme eine der Rastprofilierung des Stegendes entsprechende Wandprofilierung aufweist und daß das Eingriffsende des Steges unter einer im wesentlichen elastischen Verformung der Wandprofilierung der Steckaufnahme in diese einsteckbar ist.

Durch die Steckverbindung zwischen dem Formkörper aus gespritztem Kunststoff und dem metallischen Steg werden alle sonst mit dem Einlegen dieses Steges in eine Spritzgußform verbundenen Nachteile vermieden. Herkömmliche Steckverbindungen sind jedoch wegen der beispielsweise bei Brillengestellen vergleichsweise hohen Belastungsanforderungen für diesen Einsatz ungeeignet. Erst durch eine Wandprofilierung der Steckaufnahme entsprechend der Rastprofilierung des Eingriffsendes des Steges können diese Belastungsanforderungen erfüllt werden, wenn beim Einstecken des Eingriffsendes des Steges in die Steckaufnahme deren Wandprofilierung im wesentlichen nur elastisch durch die vorstehenden Wellenberge der Rastprofilierung des Stegendes verformt wird, so daß nach dem Einführen des Stegendes in die Steckaufnahme jeweils die Wellenberge des Stegendes in die Wellentäler der Wandprofilierung der Steckaufnahme eingreifen, ohne örtliche Spannungen zu verursachen, die zu einer Rißbildung im Bereich der Wandprofilierung der Steckaufnahme führen könnten. Die in einer solchen Art hergestellte, formschlüssige Verbindung zwischen dem metallischen Steg und dem aus Kunststoff gespritzten Formkörper ist in überraschender Weise in der Lage, allen insbesondere bei Brillen auftretenden Belastungen dauerhaft standzuhalten. Hinsichtlich der Verbindungsbelastung ergeben sich mit in Kunststoff eingespritzten Stegen durchaus vergleichbare Verhältnisse. Mit dem Fortfall des Umspritzens des metallischen Steges wird außerdem eine einfachere Lagerhaltung möglich, weil die Verbindungen erst im Bedarfsfall und nicht schon bei der Fertigung der Formkörper hergestellt werden müssen.

Über die Formgebung der wellenförmigen Rastprofilierung des Stegendes bzw. der Wandprofilierung der Steckaufnahme kann unterschiedlichen Belastungsanforderungen Rechnung getragen werden. So ergeben sich vorteilhafte Voraussetzungen für eine erfindungsgemäße Verbindung dann, wenn die Rastprofilierung des Eingriffsendes des Steges aus einer Wellung einander gegenüberliegender Stegflächen besteht. Diese Wellung der Stegflächen kann bezüglich einer Mittelebene des Steges symmetrisch verlaufen, so daß sich im Bereich der Wellenberge Dickstellen und im Bereich der Wellentäler Dünnstellen des Steges bilden. Die symmetrische Anordnung der Rastprofilierung auf einander gegenüberliegenden Stegflächen macht die Verbindung unabhängig von der jeweiligen Drehlage des metallischen Steges, weil sich für das um 180° um seine Längsachse gedrehte Eingriffsende übereinstimmende Umrißformen ergeben. Wird hingegen in einer anderen Ausführungsmöglichkeit das Eingriffsende des Steges zur Bildung der Rastprofilierung wellenartig hin- und hergebogen, so werden diese symmetrischen Verhältnisse verlassen, was beispielsweise zu einer Unterscheidung von rechten und linken Brillenteilen führt.

Die erfindungsgemäße formschlüssigen Verbindung zwischen einem metallischen Steg und einem aus Kunststoff gespritzten Formkörper erlaubt neue Brillenkonstruktionen, weil eben die Steckverbindung auch erst im Zuge der Montage vorgenommen werden kann. So wird es beispielsweise möglich, Brillenscharniere vorteilhaft zu fertigen, die aus einem in einer Lagerbuchse des Backenteils drehbar gehaltenen, zylindrischen Gelenkkörper bestehen, der mit dem Drahtbügel verbunden ist. Da der Drahtbügel der Brille durch einen Umfangsschlitz der Lagerbuchse geführt ist und der zylindrische Gelenkkörper nur axial in die Lagerbuchse eingesetzt werden kann, mußte bisher der Umfangsschlitz eine axiale Durchtrittsöffnung für den Drahtbügel aufweisen, um den mit dem Gelenkkörper verbundenen Drahtbügel in das Brillenscharnier einsetzen zu können. Bildet jedoch der als Formteil aus gespritztem Kunststoff gefertigte Lagerkörper eine erfindungsgemäße Steckaufnahme für das Eingriffsende des Drahtbügels und weist das Eingriffsende des Drahtbügels eine entsprechende Rastprofilierung auf, so kann das Eingriffsende des Drahtbügels nach dem axialen Einsetzen des Gelenkkörpers in die Lagerbuchse von außen durch den Umfangsschlitz der Lagerbuchse in radialer Richtung in die Steckaufnahme des Gelenkkörpers eingesteckt werden, um die erforderliche, formschlüssige Verbindung sicherzustellen. Damit wird eine über den gesamten Schwenkbereich des Scharniers wirksame axiale Sicherung des Gelenkkörpers in der Lagerbuchse erreicht, und zwar mit Hilfe des Drahtbügels, der im Umfangsschlitz der Lagerbuchse gegenüber einer axialen Verlagerung festgehalten wird.

Wie bereits ausgeführt wurde, ist es für die dauerhafte Belastbarkeit der formschlüssigen Verbindung von wesentlicher Bedeutung, daß die wellenartige Rastprofilierung des Stegendes der Wandprofilierung der Steckaufnahme entspricht, so daß im Eingriffsfall keine örtlich begrenzten Spannungen im Formkörper auftreten, die zu einer Überlastung des Kunststoffes führen könnten, obwohl die Verbindungsbelastung in einem zulässigen Rahmen bleibt. Um eine entsprechende Steckaufnahme für das mit einer gewellten Rasterprofilierung versehene Eingriffsende des metallischen Steges einfach fertigen zu können, kann für den Formkörper eine Spritzgußform mit einem Kern für die Steckaufnahme vorgesehen werden, der die Form des Eingriffsendes des Steges aufweist. Da ein Formkörper mit einer solchen Steckaufnahme nicht ohne weiteres entformt werden kann, das elastische Verhalten des Förmkörpers aber ein Einführen des Eingriffsendes des metallischen Steges in die Steckaufnahme zulassen muß, kann der Kern nach dem Aushärten des Formkörpers unter einem Ausnützen des elastischen Verhaltens der Wandprofilierung der Steckaufnahme aus dem Formkörper unter einer elastischen Verformung der Wandprofilierung herausgezogen werden, so daß sich vorteilhafte Konstruktionsverhältnisse für die Spritzgußformen und einfache Entformungsbedingungen für die jeweils mit solchen Spritzgußformen gefertigten Formkörper ergeben.

In der Zeichnung ist der Erfindungsgegenstand beispielsweise dargestellt. Es zeigen
- Fig. 1: einen aus Kunststoff gespritzten Formkörper mit einer erfindungsgemäßen Steckaufnahme für einen metallischen Steg, dessen Eingriffsende erst teilweise in die Steckaufnahme eingreift, in einem schematischen Axialschnitt,
- Fig. 2: eine der Fig. 1 entsprechende Darstellung des Formkörpers mit vollständig eingesetztem Steg,
- Fig. 3: eine erfindungsgemäße Verbindung zwischen einem Brillengestell und einem das Brillenscharnier tragenden Backen in einem Axialschnitt,
- Fig. 4: die Verbindung eines Kunststoffbackens mit einem Kunststoffgestell einer Brille über einen in den Backen eingespritzten metallischen Steg,
- Fig. 5: ein Brillenscharnier mit einem über eine erfindungsgemäße Verbindung befestigten Drahtbügel in einer vereinfachten Seitenansicht und
- Fig. 6: einen Schnitt nach der Linie VI-VI der Fig. 5.

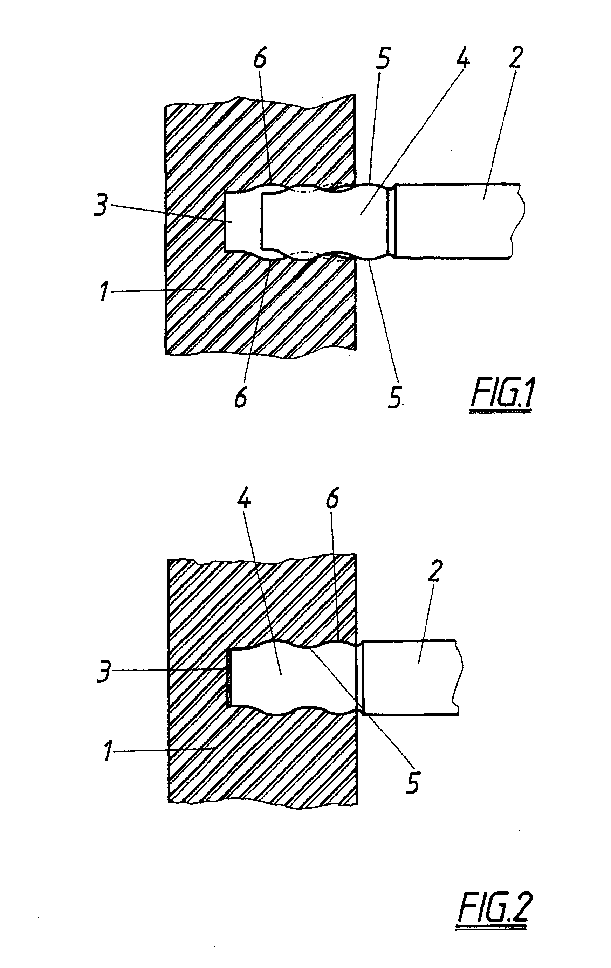

Wie den Fig. 1 und 2 zu entnehmen ist, weist der aus Kunststoff gespritzte Formkörper 1 zur Verbindung mit einem metallischen Steg 2 eine Steckaufnahme 3 für das Eingriffsende 4 des Steges 2 auf. Diese Steckaufnahme 3 ist wie das Eingriffsende 4 mit einem rechteckigen Querschnitt versehen, wobei das Eingriffsende 4 auf einander gegenüberliegenden Stegflächen mit einer wellenförmigen Rastprofilierung 5 ausgebildet ist. Da die Steckaufnahme 3 eine der Rastprofilierung 5 entsprechende Wandprofilierung 6 aufweist, wird das Eingriffsende 4 des in die Steckaufnahme 3 eingesetzten Steges 2 formschlüssig mit dem Formkörper 1 verbunden, wie dies der Fig. 2 entnommen werden kann. Beim Einsetzen des Eingriffsendes 4 in die Steckaufnahme 3 muß allerdings der Formkörper 1 im Bereich der Wandprofilierung 6 eine ausreichende elastische Verformung zulassen, um die Wellenberge der Rastprofilierung 5 des Stegendes 4 an den Wellenbergen der Wandprofilierung 6 der Steckaufnahme 3 vorbeibewegen zu können. in der Fig. 1 ist dieses Einführen des Eingriffsendes 4 in die Steckaufnahme 3 unter der notwendigen elastischen Verformung der Wandprofilierung 6 angedeutet, wobei der Sollverlauf der Wandprofilierung 6 strichpunktiert eingezeichnet ist. In der Eingriffsstellung nach der Fig. 2 werden die bei einer Zug- bzw. Druckbelastung des metallischen Steges 2 auftretenden Zug- bzw. Druckkräfte über die Flanken der wellenartigen Rastprofilierung 5 auf die anliegenden Flanken der Wandprofilierung 6 der Steckaufnahme 3 übertragen, und zwar unter Vermeidung von örtlichen Lastspitzen, so daß sich eine gute, dauerhafte Verbindung ergibt. Die drehfeste Halterung des Steges 2 gegenüber dem Formkörper 1 wird durch die Rechteckform des Querschnittes des Eingriffsendes 4 bzw. der Steckaufnahme 3 erhalten. Da sich die Zug- bzw. Druckbelastungen des Steges 2 über mehrere Flanken der Profilierungen 5 bzw. 6 auf den Formkörper 1 übertragen, wird eine Lastaufteilung erzielt, die beim Vorsehen einer entsprechenden Anzahl von Wellungen eine örtliche Überlastung des Formkörpers 1 vermeidet.

Um einen Formkörper 1 mit einer Wandprofilierung 6 der Steckaufnahme 3 in einfacher Weise fertigen zu können, wird für die Spritzgußform ein Kern entsprechend dem Eingriffsende 4 verwendet, der nach dem Aushärten des Formkörpers 1 unter einer elastischen Verformung der Wandprofilierung 6 aus der Steckaufnahme 3 herausgezogen werden kann. Bei diesem Entformungsvorgang treten ähnliche Verhältnisse auf, wie sie in der Fig. 1 dargestellt sind. Statt einen Steg 2 in die Steckaufnahme 3 einzustecken, wird lediglich ein Formkern aus der Steckaufnahme 3 herausgezogen.

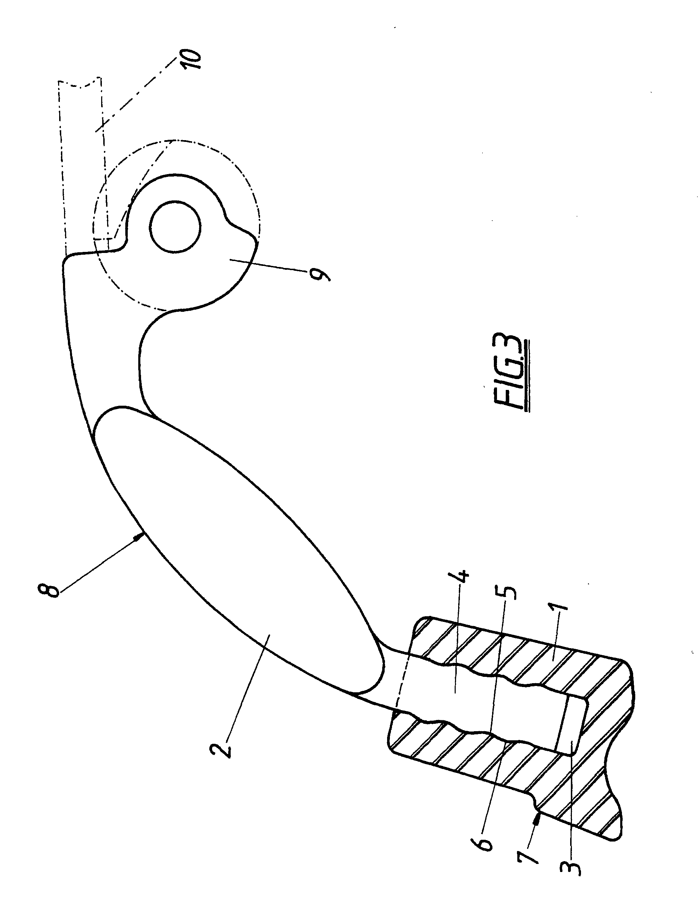

Die anhand der Fig. 1 und 2 erläuterte Steckverbindung kann überall dort eingesetzt werden, wo ein metallischer Steg 2 mit einem Formkörper 1 aus gespritztem Kunststoff verbunden werden soll, wie dies insbesondere bei Brillen mit einem Kunststoffgestell häufig vorkommt. In der Fig. 3 ist ein solcher Anwendungsfall dargestellt. Das die Brillengläser fassende Brillengestell 7 aus Kunststoff bildet den Formkörper 1 mit der Steckaufnahme 3, in die das Eingriffsende 4 des metallischen Backens 8 eingreift, der somit den Steg 2 für die Steckverbindung nach den Fig. 1 und 2 darstellt. Der Backen 8, der den einen Teil eines Brillenscharniers 9 trägt, dessen strichpunktiert angedeuteter anderer Teil dem Brillenbügel 10 zugehört, kann somit nach dem Spritzen des Gestelles 7 mit diesem verbunden werden, indem das Eingriffsende 4 in die Steckaufnahme 3 eingesteckt wird.

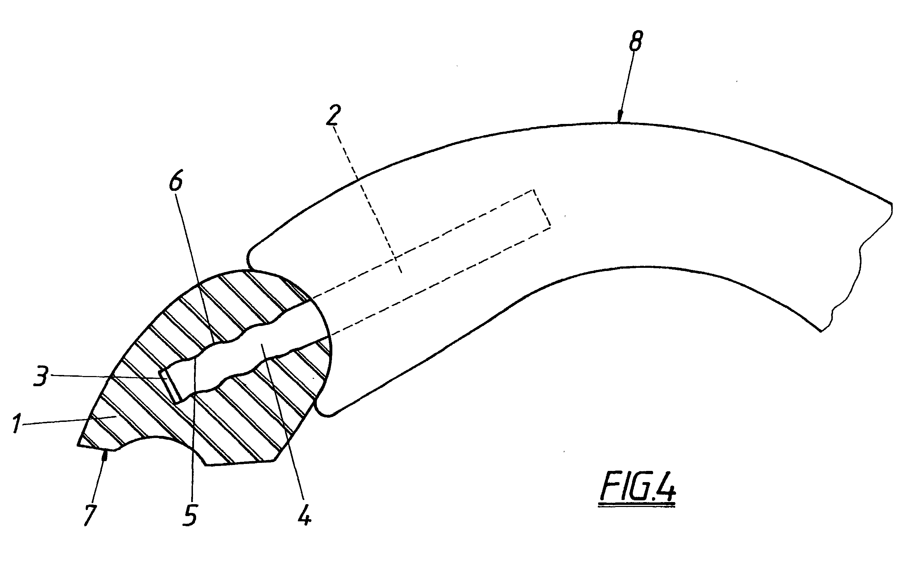

Nach der Fig. 4 soll ein Backen 8 aus Kunststoff mit dem Kunststoffgestell 7 einer Brille durch einen in den Backen 8 eingespritzten metallischen Steg 2 verbunden werden, dessen Eingriffsende 4 über den Backen 8 vorragt, was wiederum ein nachträgliches Verbinden des Backens 8 mit dem Gestell 7 durch ein bloßes Ineinanderstecken des Steges 2 in die Steckaufnahme 3 des Brillengestelles 7 erlaubt.

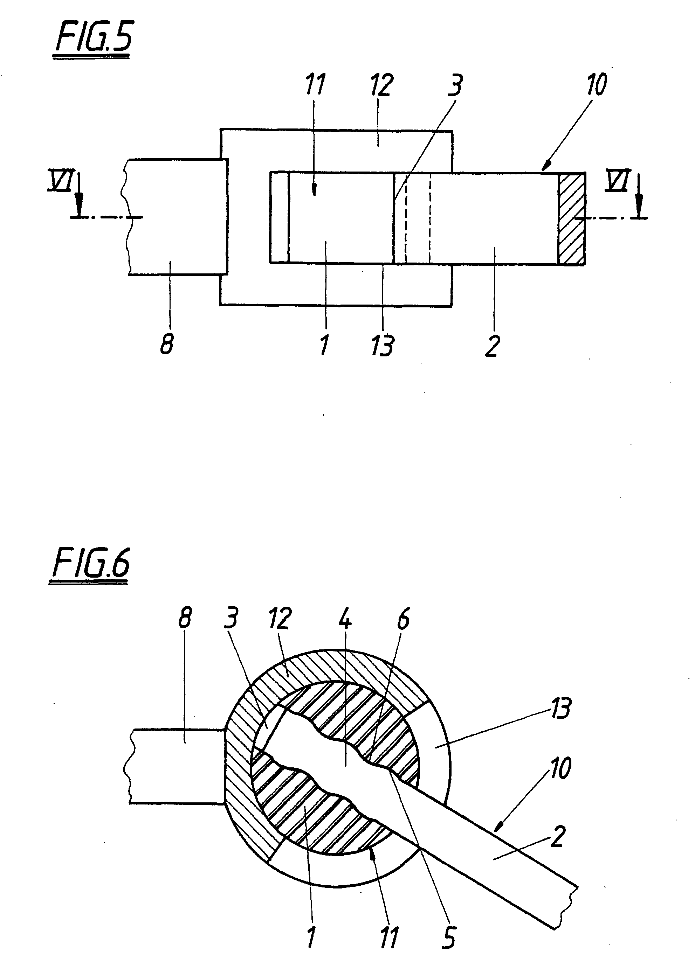

Entsprechend den Fig. 5 und 6 können mit Hilfe der erfindungsgemäßen Steckverbindung neue, sonst nicht mögliche Konstruktionen verwirklicht werden. Das in den Fig. 5 und 6 dargestellte Brillenscharnier wird durch einen zylindrischen Gelenkkörper 11 gebildet, der in einer an einem Backen 8 angeordneten Lagerbuchse 12 drehbar gehalten ist. Der Drahtbügel 10 greift dabei durch einen Umfangsschlitz 13 der Lagerbuchse 12 in den zylindrischen Gelenkkörper 11 ein. Müßte in herkömmlicher Weise der Bügel 10 mit dem Gelenkkörper 11 vor dem Einsetzen des Gelenkkörpers 11 in die Lagerbuchse 12 verbunden werden, so wäre die Lagerbuchse 12 mit einer zum Umfangsschlitz 13 führenden, eizellen Durchtrittsöffnung für den Bügel 10 zu versehen, um den Lagerkörper 11 mit dem Bügel 10 in die Lagerbuchse 12 einsetzen zu können. Wird jedoch der Lagerkörper 11 als Formkörper 1 einer Steckverbindung gemäß den Fig. 1 und 2 ausgebildet, so kann der Bügel 10 ein mit einer Rastprofilierung 5 versehenes Eingriffsende 4 bilden, das in die Steckaufnahme 3 des Gelenkkörpers 11 durch den Umfangsschlitz 13 eingeführt werden kann, um die Steckverbindung nach dem Einsetzen des Gelenkkörpers 11 in die Lagerbuchse 12 herzustellen, was eine axiale Durchtrittsöffnung für den Bügel 10 in der Lagerbuchse 12 erübrigt.

## Patentansprüche

1. Vorrichtung bestehend aus einem metallischen Steg (2) und einem aus Kunststoff gespritzten Formkörper (1), insbesondere für eine Brille, wobei ein Ende (4) des Steges (2) in den Formkörper (1) formschlüssig eingreift, **dadurch gekennzeichnet, daß** der Formkörper (1) eine Steckaufnahme (3) für das mit einer wellenförmigen Rastprofilierung (5) versehene Eingriffsende (4) des Steges (2) bildet, daß die Steckaufnahme (3) eine der Rastprofilierung (5) des Stegendes (4) entsprechende Wandprofilierung (6) aufweist und daß das Eingriffsende (4) des Steges (2) unter einer im wesentlichen elastischen Verformung der Wandprofilierung (6) der Steckaufnahme (3) in diese einsteckbar ist.

2. Vorrichtung nach Anspruch 1, **dadurch gekennzeichnet, daß** die Rastprofilierung (5) des Eingriffsendes (4) des Steges (2) aus einer Wellung einander gegenüberliegender Stegflächen besteht.

3. Vorrichtung nach Anspruch 2, **dadurch gekennzeichnet, daß** die Wellung der Stegflächen bezüglich einer Mittelebene des Steges (2) symmetrisch verläuft.

4. Vorrichtung nach Anspruch 2, **dadurch gekennzeichnet, daß** das Eingriffsende (4) des Steges (2) zur Bildung der Rastprofilierung (5) wellenartig hin- und hergebogen ist.

5. Brillenscharnier mit einer Vorrichtung nach einem der Ansprüche 1 bis 4 zwischen einem Drahtbügel und einem zylindrischen Gelenkkörper, der in einer vom Drahtbügel in einem Umfangsschlitz durchsetzten Lagerbuchse drehbar gehalten ist, **dadurch gekennzeichnet, daß** der als Formteil (1) aus gespritztem Kunststoff gefertigte Lagerkörper (11) die Steckaufnahme (3) für das eine Rastprofilierung (5) aufweisende Eingriffsende (4) des Drahtbügels (10) bildet, das durch den Umfangsschlitz (13) der Lagerbuchse (12) in die Steckaufnahme (3) des Lagerkörpers (11) einsteckbar ist.

6. Verfahren zur Herstellung einer Vorrichtung nach einem der Ansprüche 1 bis 5 mit einer einen Kern für die Steckaufnahme aufweisenden Form für den aus Kunststoff gespritzten, nach seinem Aushärten entformbaren Formkörper, **dadurch gekennzeichnet, daß** der die Form des Eingriffsendes des Steges aufweisende Kern nach dem Aushärten des Formkörpers unter einer elastischen Verformung der Wandprofilierung der Steckaufnahme aus dem Formkörper herausgezogen und dann das Eingriffsende des Steges in den Formkörper eingesteckt wird.

## Claims

1. A device consisting of a metal web (2) and a plastic injection moulding (1), more particularly for a pair of spectacles, one end (4) of the web (2) engaging positively in the moulding (1), **characterised in that** the moulding (1) forms a socket (3) for the engagement end (4) of the web (2) provided with a corrugated catch profiling (5), **in that** the socket (3) has a wall profiling (6) corresponding to the catch profiling (5) of the web end (4), and **in that** the engagement end (4) of the web (2) is insertable into the socket (3) with substantially elastic deformation of the wall profiling (6) of the socket (3).

2. A device according to claim 1, **characterised in that** the catch profiling (5) of the engagement end (4) of the web (2) consists of a corrugation of oppositely disposed web surfaces.

3. A device according to claim 2, **characterised in that** the corrugation of the web surfaces extends symmetrically with respect to a central plane of the web (2).

4. A device according to claim 2, **characterised in that** the engagement end (4) of the web (2) is bent to and fro in corrugated form to form the catch profiling (5).

5. A spectacles hinge with a device according to any one of claims 1 to 4 between a wire side piece and a cylindrical hinge body held rotatably in a bearing bush through which the wire side extends in a peripheral slot, **characterised in that** the bearing member (11) made as a plastic injection moulding (1) forms the socket (3) for the engagement end (4) of the wire side (10) having a catch profiling (5), said engagement end being insertable into the socket (3) in the bearing member (11) through the peripheral slot (13) in the bearing bush (12).

6. A method of producing a device according to any one of claims 1 to 5, with a mould having a core for the socket and intended for the plastic injection moulding removable from the mould after setting, **characterised in that** the core, having the shape of the engagement end of the web, is pulled out of the moulding after the setting thereof, with elastic deformation of the wall profiling of the socket, and then the engagement end of the web is inserted into the moulding.

## Revendications

1. Dispositif, formé d'un segment (2) métallique et d'une pièce moulée (1), obtenu par injection de matière synthétique, en particulier pour une paire de lunettes, une extrémité (4) du segment (2) s'engageant, par une liaison à ajustement de forme, dans la pièce moulée (1), **caractérisé en ce que** la pièce moulée (1) forme un logement d'enfichage (3), pour l'extrémité d'engagement (4), munie d'un profilage d'encliquetage (5) de forme ondulée, du segment (2), **en ce que** le logement d'enfichage (3) présente un profilage de paroi (6) correspondant au profilage d'encliquetage (5) de l'extrémité de segment (4), et **en ce que** l'extrémité de segment (4) du segment (2) s'engage dans le logement d'enfichage (3) avec une déformation sensiblement élastique du profilage de paroi (6) du logement d'enfichage (3), dans celui-ci.

2. Dispositif selon la revendication 1, **caractérisé en ce que** le profilage d'encliquetage (5) de l'extrémité d'engagement (4) du segment (2) est formé d'une ondulation de surfaces de segment opposées les unes aux autres.

3. Dispositif selon la revendication 2, **caractérisé en ce que** l'ondulation des surfaces de segment est d'allure symétrique par rapport à un plan médian du segment (2).

4. Dispositif selon la revendication 2, **caractérisé en ce que** l'extrémité d'engagement (4) du segment (2) est courbée dans un sens et dans l'autre de façon ondulée, pour former le profilage d'encliquetage (5).

5. Charnière pour paire de lunettes avec un dispositif selon l'une des revendications 1 à 4, entre une branche de lunette et un corps d'articulation cylindrique, maintenu à rotation dans une douille de palier traversée par la branche de lunette dans une fente périphérique, **caractérisée en ce que** le corps de palier (11), fabriqué en matière synthétique injectée en tant que pièce moulée (1), forme le logement d'enfichage (3) pour l'extrémité d'engagement (4), présentant un profilage d'encliquetage (5), de la branche de lunette (10), pouvant être enfichée, à travers la fente périphérique (13) de la douille de palier (12), dans le logement d'enfichage (3) du corps de palier (11).

6. Procédé de fabrication d'un dispositif selon l'une des revendications 1 à 5, avec un moule, présentant un noyau, pour le logement d'enfichage, le moule étant prévu pour produire une pièce moulée obtenue par injection de matière synthétique, démoulable après son durcissement, **caractérisé en ce que** le noyau, présentant la forme de l'extrémité d'enfichage du segment, après durcissement de la pièce moulée, est extrait de cette pièce moulée avec une déformation élastique du profilage de paroi du logement d'enfichage et, ensuite, l'extrémité d'engagement du segment est enfichée dans la pièce moulée.
